# NEUE EUROPÄISCHE PATENTSCHRIFT

(11) **EP 0 458 253 B2**
(45) Veröffentlichungstag und Bekanntmachung des Hinweises auf die Entscheidung über den Einspruch: **09.07.1997**
(45) Hinweis auf die Patenterteilung: 22.02.1995
(21) Anmeldenummer: 91108159.4
(22) Anmeldetag: 21.05.1991
(51) Int. Cl.: F16K 1/30, F16K 31/08

(54) **Absperrorgan für einen unter Innendruck eines Mediums stehenden Druckbehälter**
Shut-off valve for a fluid pressure vessel
Soupape d'arrêt pour un récipient sous pression d'un fluide

(30) Priorität: 22.05.1990 DE 9005826 U
(43) Veröffentlichungstag der Anmeldung: 27.11.1991
(73) Patentinhaber: VTI Ventil Technik GmbH, 58706 Menden (DE)
(72) Erfinder: Gerster, Michael, Dipl.-Ing., Dipl.-Wirtsch.-Ing., W-5000 Köln 40 (DE); Wichterich,Hans, W-5000 Köln 50 (DE)
(74) Vertreter: Bockermann, Rolf, Dipl.-Ing.

(56) Entgegenhaltungen:
- EP-A- 0 233 775
- EP-A- 0 273 614
- EP-A- 0 386 740
- DE-A- 3 222 041
- DE-B- 1 198 628
- DE-C- 0 870 053
- DE-C- 2 909 046
- DE-C- 3 901 422
- DE-U- 8 809 383
- DE-U- 9 005 826
- FR-A- 1 569 858
- GB-A- 1 319 764
- GB-A- 2 103 391
- US-A- 3 626 474

## Beschreibung

Die Erfindung betrifft ein Absperrorgan für einen unter Innendruck eines Mediums stehenden Druckbehälter gemäß den Merkmalen im Oberbegriff des Anspruchs 1.

Druckbehälter, insbesondere Hochdruck-Gasflaschen, dienen zur Aufnahme und Lieferung von unterschiedlichen Gasen. Die Druckbehälter enthalten solche Gase entweder in gasförmigem Zustand bei hohen Drücken wie 200 bzw. 300 bar, oder, beispielsweise im Falle von Kohlendioxid, als unter Druck stehende Flüssigkeit. Andere Gase, wie beispielsweise Acetylen, sind unter Druck im Behälter zur Vermeidung von Explosionsgefahr in einem Aufnahmemedium wie Aceton gelöst. Weil es sich vielfach um ganz spezielle Gase handelt, die aus Gründen der Sicherheit oder wegen ihrer Verwendung z.B. in der Technik, beim Tauchen oder in der Medizin nicht mit anderen Gasen bzw. mit Luft vermischt werden dürfen, sind für deren Druckbehälter sogenannte Restdruckventile erforderlich, die bei geöffnetem Entnahmeventil einen vollständigen Druckabbau im Behälterinneren verhindern, sobald der Innendruck des Gases einen vorbestimmten Schwellwert unterschreitet. Das Restdruckventil verschließt den Druckbehälter dann so lange, bis dieser mit dem speziellen Gas wieder gefüllt wird. Dabei kann fallweise das Restdruckventil geöffnet werden, um die im Druckbehälter noch vorhandene Gasrestmenge vor der Neufüllung restlos abzusaugen. Restdruckventile vermeiden das Eindringen von Fremdsubstanzen von außen und stellen sicher, daß nicht bei jeder erneuten Füllung der Gasflasche ein Evakuierungsablauf notwendig wird.

Gemäß der DE-OS 3 222 041 wurde vorgeschlagen, ein Restdruckventil zu miniaturisieren und so auszubilden, daß es im seitlichen Anschlußstutzen des Absperrorgans angeordnet werden kann. Das so konzipierte Restdruckventil weist ein axialdurchströmtes Ventilgehäuse mit einem darin axialbeweglichen Ventilverschlußstück auf, das von einem Druckelement auf einen Ventilsitz gedrückt werden soll, wenn der Innendruck im Druckbehälter einen vorgegebenen Mindestwert unterschreitet. Der Ventilsitz umgibt bei dieser bekannten Bauart das Ventilverschlußstück und weist auf seinen beiden in Axialrichtung voneinander abgewandten Stirnseiten Ventilsitzflächen auf. Das Ventilverschlußstück ist im Ventilsitz axial beweglich angeordnet und trägt einen elastisch zusammendrückbaren Dichtring, mit dem es sich je nach seiner axialen Stellung gegen die eine oder die andere Sitzfläche des Ventilsitzes anlegen kann.

Von Nachteil ist hierbei die vergleichsweise komplizierte und aufwendige Bauart. Die sich hierdurch ergebenden Schwierigkeiten wirken sich um so mehr aus, als für den Einbau im Anschlußstutzen ein Aufnahmeraum von maximal etwa 12 bis 15 mm Durchmesser und 20 mm Tiefe zur Verfügung steht und die hierdurch bedingten kleinen Abmessungen des Restdruckventils in Anbetracht von dessen spezieller Funktion bei Herstellung, Montage und Wartung ein äußerst hohes Maß an Präzision erfordern. Entsprechend hoch sind auch die hierfür aufzuwendenden Kosten sowie die Risiken von Fehlfunktionen. Dabei ist als Druckelement für das Ventilverschlußstück eine Teleskopfeder vorgesehen, die sich einerseits am Ventilgehäuse und andererseits am Ventilverschlußstück abstützt. Eine Justierung der Teleskopfeder kann bei diesen beengten Einbauverhältnissen nicht sicher erfolgen. Zudem weist der Ventilsitz eine kreisförmige Öffnung auf, wogegen der Dichtring am Ventilverschlußstück aus elastischem Material einen größeren Außendurchmesser besitzt als diese Öffnung. Das korrekte Zusammenwirken dieser Elemente bedarf daher ebenfalls äußerster Präzision, weil bereits geringe Toleranzabweichungen der mechanischen Teile und/oder der Elastizität des Dichtrings die Ventil funktion erheblich verändern können. Insgesamt lassen sich bei dieser Bauart größere Abweichungen von der SOLL-Einstellung des Restdruckventils nicht sicher vermeiden, ebensowenig die Veränderungen im Verlauf einer längeren Betriebsdauer, z.B. durch Versprödung des elastischen Dichtrings.

Aus der GB-A-1 319 764 ist ferner ein Absperrorgan bekannt. Darin ist ein mit einer Schraubendruckfeder belastetes Restdruckventil angeordnet. Dem Restdruckventil gegenüberliegend befindet sich in einer Bohrung eines Stutzens ein vom Gasdruck beaufschlagbarer Kolben mit nach außen geführtem Indikator-Druckstift zur manuellen Überprüfung des Restdrucks. Eine Vorrichtung zur Entsperrung des Restdruckventils ist bei dem bekannten Absperrorgan nicht vorgesehen.

Die DE 870 053 offenbart ein Stahlflaschenventil zur Verhütung der Verunreinigung wertvoller Gase in Stahlflaschen mit einem federbelasteten Ventilkegel, welcher bei Überschreiten eines bestimmten Überdrucks in der Stahlflasche gegen den Federdruck von einem Ventilsitz abgehoben, bei Unterschreiten eines gewissen Überdrucks des Gases in der Stahlflasche vom Federdruck gegen den Gasdruck an den Ventilsitz gepreßt wird. Ein derartiges Restdruckventil liegt quer zur Längsachse des Ventilkörpers. Die den Ventilkegel belastende Feder liegt in einer bodenseitig geschlossenen Schraubhülse, die in eine seitliche Gewindebohrung des Ventilkörpers ein drehbar ist. Diametral gegenüberliegend ist ein Gewindestutzen am Ventilkörper angeformt, der einen Bolzen lagert, mit dessen Hilfe der Ventilkegel gegen den Druck der auf ihm lastenden Feder von seinem Ventilsitz abgehoben werden kann. Dazu weist der Bolzen ein Betätigungsende auf, über das er in dem Gewindestutzen axial verdrehbar ist. Um die permanente Zugänglichkeit des Bolzens zu verhindern, ist dessen Betätigungsende durch eine Kappe abgeschirmt, die auf den Gewindestutzen geschraubt ist. Der den Hauptventilsitz und das darauf preßbare Verschlußelement aufnehmende Gehäuseraum ist über eine Schrägbohrung mit einem Anschluß-Gewindestutzen oberhalb der Schraubhülse verbunden.

Das Prinzip einer mit Magneten versehenen Betätigungsvorrichtung eines Ventils ist aus der EP-A-0 273 614 bekannt. Es handelt sich dabei um ein Ventil zur Durchfluß-Steuerung ohne Restdruckventil.

Im Umfang der DE 39 01 422 Cl zählt eine Füll- und Entleerungsvorrichtung für Druckbehälter mit einem Entnahmeventil zum Stand der Technik, bei welchem der den Hauptventilsitz und das darauf preßbare Verschlußelement aufnehmende Gehäuseraum über eine Querbohrung mit einem Anschluß-Gewindestutzen in Verbindung steht. In diesem Anschluß-Gewindestutzen ist ein Restdruckventil mit einem wenigstens zum Teil aus einem magnetischen Material bestehenden Verschlußschieber angeordnet. Der Verschlußschieber wird durch eine Druckfeder permanent in Richtung auf einen zur Verschieberichtung des Verschlußschiebers sich senkrecht erstreckenden Ventilsitz umfangsseitig der Querbohrung belastet. Dazu weist der Verschlußschieber eine stirnseitige Dichtscheibe auf.

Um einen Druckbehälter befüllen und entleeren zu können, ist es zwingend notwendig, ein spezielles Anschlußstück mit dem Anschluß-Gewindestutzen zu kuppeln. Dieses Anschlußstück besitzt einen Flansch, welcher mit einer Füll- oder Entleerungsleitung verbunden werden kann. Der Flansch ist durch ein Rohr mit einer Buchse fest verbunden, wobei die Buchse das Rohr umgreift. In Verlängerung des Rohrs sind eine magnetische Anlagehülse, die als Öffnungselement dient, und eine Distanzhülse innerhalb der Buchse angebracht. Die Buchse ist von einem Mutternelement drehbar umgeben, das ein Innengewinde zum Anschluß an das Außengewinde des Anschluß-Gewindestutzens aufweist. Ferner ist noch ein Handgriff zur Montage des Anschlußstücks mit dem Anschluß-Gewindestutzen vorgesehen. Ist das Anschlußstück mit dem Anschluß-Gewindestutzen verbunden, hat die magnetische Anlagehülse den Verschlußschieber angezogen und damit die Dichtscheibe vom Ventilsitz entfernt. Das Restdruckventil ist geöffnet.

Aufgrund des speziellen Anschlußstücks können übliche standardisierte Reduzierventile nicht zum Einsatz gelangen. Eine weitere Eigenschaft ist die, daß der zumindest teilweise aus magnetischem Material bestehende Verschlußschieber und auch die auf ihn lastende Druckfeder sowohl bei der Entnahme als auch bei der Befüllung vom Medium umströmt sind. Korrosionen sind die unausbleibliche Folge. Darüberhinaus ist in diesem Zusammenhang zu beachten, daß es bei der Umströmung des Verschlußschiebers und der Druckfeder unter Druckabfall, insbesondere aus der flüssigen Phase, zur Eisbildung und damit zum Blockieren des Restdruckventils kommen kann.

Da der Verschlußschieber durch die Druckfeder ständig in Richtung auf den Ventilsitz belastet ist, tendiert das Restdruckventil während der Befüllung ständig zum Schließen. Um bei den modernen Füllanlagen die teuren Füllzeiten zu reduzieren, wird mit relativ hohen Gasgeschwindigkeiten gearbeitet. Folglich kann nicht vermieden werden, daß das Restdruckventil unbeabsichtigt schließt und somit der Füllvorgang unter Erzeugung eines hohen schädlichen Druckstoßes unterbrochen wird. Das Restdruckventil im Anschluß-Gewindestutzen ist außerdem mit den einfachsten Mitteln, wie z.B. Büroklammern oder Schraubendreher, manipulierbar. Ferner führt im bekannten Fall das An- und Abkoppeln des Anschlußstücks beim Füll- und Entleervorgang dazu, daß die Druckfeder des Restdruckventils häufig gespannt und entspannt wird. Damit ist aber ein hoher Verschleiß aller sich relativ bewegenden Teile des Restdruckventils verbunden. Schließlich ist aufgrund der exponierten Lage des Restdruckventils unmittelbar an der Mündung des Anschluß-Gewindestutzens die Möglichkeit der Verunreinigung sowie der Beschädigung gegeben.

Der Erfindung liegt die Aufgabe zugrunde, ein Absperrorgan für einen unter Innendruck eines Mediums stehenden Druckbehälter anzugeben und mit einem Restdruckventil auszubilden, welches auf einfache Weise handhabbar ist und einen Gasaustritt bei geöffnetem Absperrorgan bei einer exakt einstellbaren niedrigen Druckschwelle des Innendrucks verhindert. Insbesondere soll das neue Absperrorgan einfach im Aufbau und zuverlässig in der Arbeitsweise sein und sich problemlos einbauen bzw. montieren und justieren lassen. Ferner soll auch das Aufschrauben einer Sicherheitskappe zum Schutz des Absperrorgans nicht behindert werden. Ebenso soll die Restdruckabsperrung von den Füllstationen einfach und ohne aufwendige Arbeit zum Zwecke einer Gasinnenprüfung geöffnet werden können.

Diese Aufgabe wird mit der Erfindung bei einem Absperrorgan der eingangs genannten Art entsprechend den kennzeichnenden Merkmalen von Anspruch 1 gelöst.

Da das Restdruckventil nach Art eines Rückschlagventils ausgebildet ist, welches durch hohen Innendruck, d.h. einen Druck höher als der eingestellte Restdruck, beim Ausströmen von Gas geöffnet wird, muß das Restdruckventil im Füllungsvorgang des Druckbehälters bei geöffnetem Absperrorgan von seinem Ventilsitz abgehoben und damit entsperrt sein, was mittels der aufgezeigten Erfindungsmerkmale durch Magnetkraft auf einfache Weise bewirkt wird. Mit der Anordnung eines mindestens teilweise aus magnetischem Material bestehenden Verschlußstücks ergibt sich erstmals eine problemlose Möglichkeit, das Restdruckventil ohne mechanischen Eingriff, nur durch Anlegen eines Gegenmagneten bzw. eines Magnetfelds von außen zu entsperren.

Nach der Erfindung ist das Restdruckventil quer zur Achse des Körpers angeordnet, und der Kanal unterhalb des Ventilsitzes weist eine Unterbrechung auf, welche durch, in Ausströmrichtung des Mediums gesehen, vor und hinter der Unterbrechung an den Kanal anschließende Umleitungsbohrungen überbrückt ist, wobei die in Ausströmrichtung vordere Umleitungsbohrung mit einem Ventilsitz und dem von einer Druckfeder auf diesem gegen den Druck des Mediums gehaltenen Verschlußstück als Restdruckventil ausgebildet ist. Das aufgezeigte Restdruckventil ist in seinem Aufbau äußerst unkompliziert und hat den weiteren Vorteil, daß seine wesentlichen Funktionselemente beim Füllen oder Entleeren des Mediums von diesem nicht axial durchströmt werden, wie dies bei bekannten Bauarten der Fall ist. Auch kann der Federdruck problemlos justiert werden.

Die Erfindung sieht weiter vor, daß der Körper des Absperrorgans einen Gewindestutzen aufweist, in dessen Innenraum die Umleitungsbohrungen münden, wobei dieser Gewindestutzen das Verschlußstück mit der Druckfeder in einer Bohrung axial führbar aufnimmt und diese Bohrung nach außen mit einer Verschlußkappe und einem Dichtungsmittel hermetisch abgedichtet ist. Mit dieser Bauart ergibt sich weiterhin der Vorteil, daß die Druckfeder eine genormte Schraubendruckfeder sein kann, welche sich z.B. durch Beilagen wie ringförmige Linings bzw. Unterlegscheiben in ihrer Druckkraft auf einfache Weise und mit äußerster Präzision einstellen läßt. Die Anordnung des Restdruckventils in einem separaten Gewindestutzen, der nach außen mit einer speziell geformten Verschlußkappe verschlossen ist, ermöglicht beim Zusammenbau des Restdruckventils sehr günstige Montageverhältnisse. Hieraus resultieren entsprechend günstige Fertigungsbedingungen sowie problemlose Wartungs- und Reparaturmöglichkeiten.

Das Verschlußstück weist einen mit einem umfangsseitig gekammerten Dichtring versehenen Schließdorn auf, der durch die Druckfeder gegen den Ventilsitz in der vorderen Umleitungsbohrung gedrückt ist.

Ein weiteres wesentliches Merkmal der Erfindung ist der mit einem Magneten ausgestattete kappenartige Magnetschlüssel, welcher von außen an die den Gewindestutzen verschließende Verschlußkappe anlegbar ist. Der Magnet in dem Magnetschlüssel sorgt dafür, daß das Verschlußstück verlagert und dabei der Schließdorn vom Ventilsitz abgehoben wird. Dadurch ist auch bei noch geringem Restdruck des Mediums der Weg zwischen dem Druckbehälter und dem Hauptventilsitz des Absperrorgans frei, so daß es kein Problem bildet, auch diesen Restdruck aus dem Druckbehälter abzulassen oder ggf. den Druckbehälter wieder zu befüllen.

Nach Anspruch 2 kann das Verschlußstück am freien Ende einen Aufnahmeraum aufweisen, in dem ein Permanentmagnet angeordnet ist. Anstelle des Permanentmagneten kann im Verschlußstück aber auch ein ferromagnetischer Anker angeordnet sein, der von außen über ein starkes Magnetfeld, z.B. einen Elektromagneten, angezogen wird.

Desweiteren besteht eine vorteilhafte Ausführungsform der Erfindung in den Merkmalen des Anspruchs 3, wonach das Verschlußstück selbst aus ferromagnetischem Material bestehen kann.

Eine weitere Ausgestaltung sieht gemäß Anspruch 4 vor, daß in der Bohrung des Gewindestutzens ein mit der Verschlußkappe abgestütztes und an beiden Enden mit Dichtungsmitteln gegenüber der Bohrung abgedichtetes Einsatzstück eingespannt ist, das in einer sich nach hinten öffnenden Bohrung ein axial bewegliches Verschlußstück mit einem Schließdorn gleitbar aufnimmt, wobei dieser durch eine gegen den Ventilsitz des Restdruckventils gerichtete zentrale Bohrung des Einsatzstücks hindurchtretend von der Druckfeder mit vorgegebener Kraft gegen den Ventilsitz andrückbar ist.

Eine weitere vorteilhafte Ausgestaltung sieht nach Anspruch 5 vor, daß die zentrale Bohrung des Einsatzstücks an der Mündung mit einem Ventilsitz ausgebildet ist und der Schließdorn einen Dichtring aufweist, der bei Sperrstellung des Restdruckventils gegen dessen Ventilsitz und bei Entsperrung desselben gegen den Ventilsitz des Einsatzstücks anliegt.

Nach einer weiteren zweckmäßigen Ausgestaltung ist entsprechend Anspruch 6 vorgesehen, daß die zentrale Bohrung nach rückwärts unter Bildung einer inneren Schulter einen Bereich verkleinerten Durchmessers und der in das Verschlußstück eingeschraubte Schließdorn unter Bildung einer äußeren Schulter einen Bereich vergrößerten Durchmessers aufweist, durch deren Zusammenwirken bei der Entsperrungsstellung der Weg des Schließdorns beim gegenseitigen Anschlag der Schultern begrenzt und der Dichtring bei seiner Auflage am Ventilsitz entlastet wird. Hierdurch wird mit Vorteil vermieden, daß der als Dichtung vorgesehene O-Ring durch Überlastung ermüdet und seine Funktionssicherheit im Laufe der Zeit verringert wird.

Anspruch 7 sieht gemäß einer weiteren Ausführungsform vor, daß der Körper des Absperrorgans mit dem Gewindestutzen sowie dessen Verschlußkappe aus diamagnetischem Werkstoff, beispielsweise aus Messing, Bronze oder Edelstahl bestehen.

Weiterhin kann entsprechend Anspruch 8 auch das Verschlußstück aus diamagnetischem Werkstoff bestehen. Weil der diamagnetische Werkstoff das Magnetfeld des Permanentmagneten nicht wesentlich beeinflußt, kann das Restdruckventil durch Anlegen eines ferromagnetischen Ankers oder Magnetkörpers von außen an die Verschlußkappe durch Anziehen des Verschlußstücks gegen die Kraft der Druckfeder vom Ventilsitz abgehoben und das Restdruckventil damit entsperrt werden.

Ferner ist gemäß Anspruch 9 vorgesehen, daß die Verschlußkappe an ihrer Außenfläche zylinderförmig und insbesondere ohne Angriffsflächen für ein Werkzeug wie Schlüssel oder Zange ausgebildet ist. Es handelt sich hierbei um eine Vorsichtsmaßnahme im Interesse der Betriebssicherheit. Gegebenenfalls könnte darüberhinaus die Verschlußkappe mit einem Sicherungsdraht und einer Plombe gesichert sein. Durch diese Ausgestaltung soll ein unbefugtes Lösen der Verschlußkappe verhindert werden. Bei unter Druck stehendem Druckbehälter könnte dieses sonst zu ernsten Verletzungen oder zu Gasvergiftungen führen.

Weitere Einzelheiten, Merkmale und Vorteile der Erfindung ergeben sich aus der nachstehenden Erläuterung von in den Zeichnungen schematisch dargestellten Ausführungsbeispielen. Es zeigen:
- Figur 1: ein Absperrorgan mit einem darin angeordneten Restdruckventil, teilweise im Vertikalschnitt entlang seiner Mittelachse;
- Figur 2: eine Teilansicht des Absperrorgans gemäß Figur 1, mit dem Restdruckventil im Zustand der Entsperrung;
- Figur 3: eine Teilansicht des geöffneten Absperrorgans mit durch den Druck des Gases beim Ausströmen geöffnetem Restdruckventil;
- Figur 4: eine Teilansicht des geöffneten Absperrorgans mit nach Absinken des Innendrucks unter den vorgegebenen Schwellwert geschlossenem Restdruckventil;
- Figur 5: eine Ansicht einer anderen Ausführung eines Absperrorgans mit Restdruckventil im geöffneten Zustand;
- Figur 6: eine Teilansicht des geschlossenen Absperrorgans in der Ausführung gemäß Figur 5.

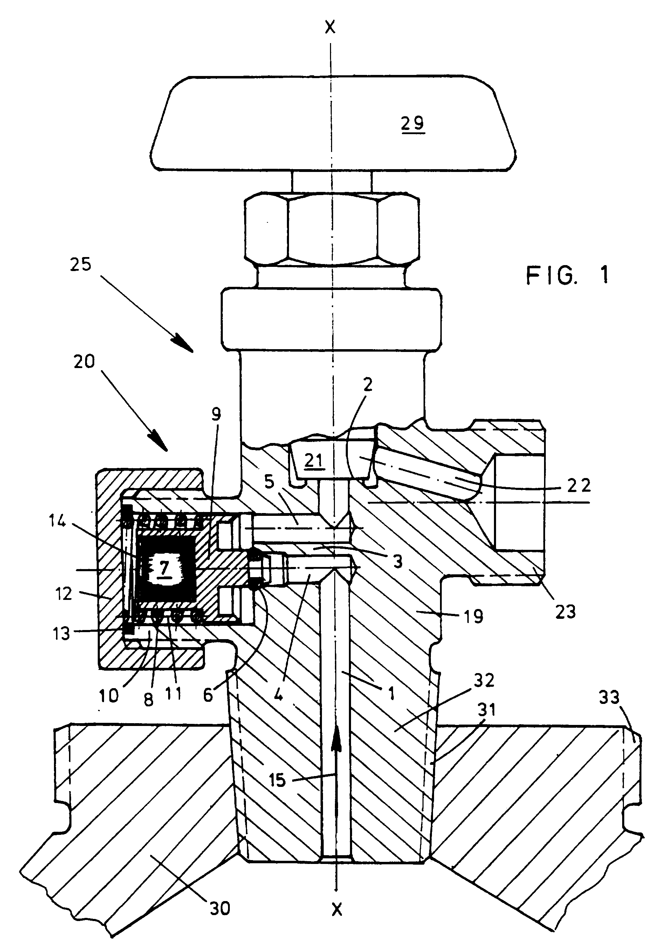

Gemäß Figur 1 weist das Oberteil eines Druckbehälters (30) ein zur Aufnahme eines Absperrorgans (25) mittig angeordnetes konisches Gewinde (31) auf. Dieses nimmt den unteren Fortsatz des Absperrorgans (25) mit einem Gewindekonus (32) auf. Der Hals des Druckbehälters (30) trägt außen ein Gewinde (33). Dieses ist zum Aufschrauben einer nicht gezeigten Verschlußkappe bestimmt und begrenzt damit zugleich die mögliche seitliche Ausdehnung vom Körper (19) des Absperrorgans (25).

Das Absperrorgan (25) ist mit einem durch seine hier vertikale Achse (x-x) verlaufenden Kanal (1) mit Hauptventilsitz (2) versehen, der mittels eines Verschlußelements (21) verschließbar ist. Der den Hauptventilsitz (2) und das Verschlußelement (21) aufnehmende Gehäuseraum steht über eine Bohrung (22) mit einem quer zur Achse (x-x) des Körpers (19) des Absperrorgans (25) angeordneten Anschluß-Gewindestutzen (23) in Verbindung.

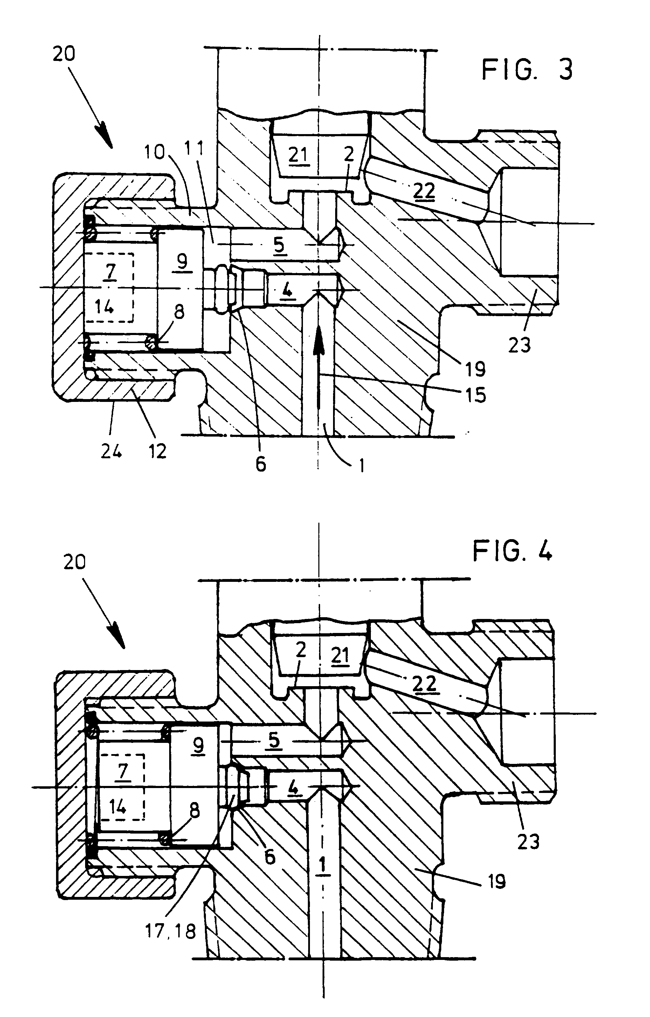

Das Absperrorgan (25) weist ein in dessen Körper (19) integriertes Restdruckventil (20) auf. Dieses ist so ausgebildet, daß es einen Austritt des Mediums bei vom Hauptventilsitz (2) abgehobenem Verschlußelement (21) verhindert (Figur 4), sobald der Innendruck des Mediums im Druckbehälter (30) einen vorgegebenen Schwellwert von z.B. 2 bar unterschreitet.

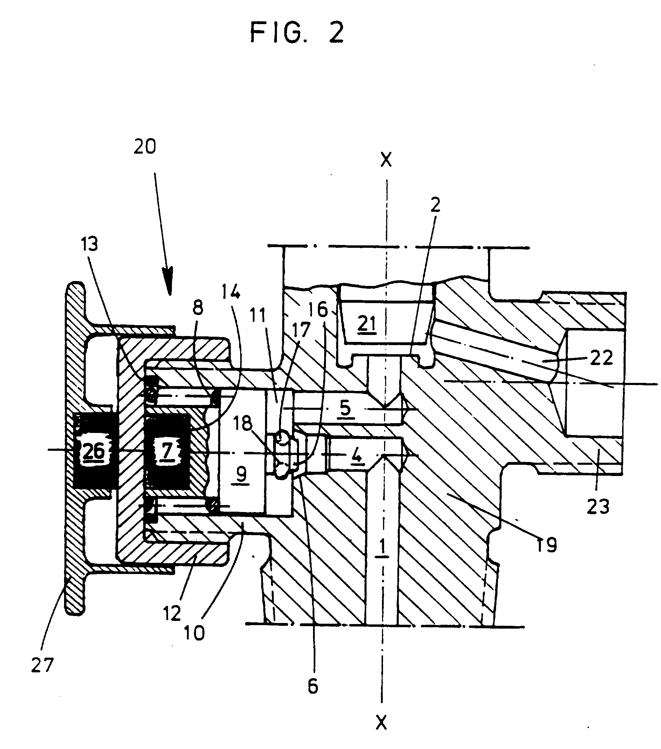

Der Kanal (1) weist unterhalb des Hauptventilsitzes (2) eine Unterbrechung (3) auf. Diese ist durch je eine, in Ausströmrichtung (15) des Mediums gesehen, vor und hinter der Unterbrechung (3) an den Kanal (1) anschließende Umleitungsbohrung (4, 5) überbrückt. Die in Ausströmrichtung (15) vordere Umleitungsbohrung (4) ist mit einem Ventilsitz (6) und einem von einer Druckfeder (8) auf diesem mit vorgegebener Kraft gegen den Druck des Mediums gehaltenen Verschlußstück (9) als Restdruckventil (20) ausgebildet. Der Gewindestutzen (10), in dessen Innenraum die Umleitungsbohrungen (4, 5) münden, nimmt das Verschlußstück (9) mit der Druckfeder (8) in einer Bohrung (11) axial führbar auf. Die Bohrung (11) ist nach außen mit einer Verschlußkappe (12) und einem Dichtungsmittel hermetisch abgedichtet. Das Verschlußstück (9) ist am freien Ende, d.h. also in Richtung gegen die Verschlußkappe (12) mit einem Aufnahmeraum (14) (vgl. Fig. 2-4) ausgebildet, wobei es sich vorzugsweise um eine zylinderförmige Ausdrehung handelt, die dazu dient, einen Permanentmagneten (7) aufzunehmen bzw. darin anzuordnen und zu befestigen. Die Befestigung kann beispielsweise durch ein medienresistentes Klebemittel erfolgen. Der Permanentmagnet (7) könnte aber auch auf andere Weise, z.B. durch eine Madenschraube, durch Verstiften, Bördeln oder ähnliche Sicherungen im Aufnahmeraum (14) gehalten sein.

Um die Wirkung des vom Permanentmagneten (7) ausgehenden Magnetfelds nicht zu beeinflussen, ist vorgesehen, daß der Körper (19) des Absperrorgans (25) mit dem Gewindestutzen (10) sowie die Verschlußkappe (12) aus diamagnetischem Werkstoff, beispielsweise aus Messing, Bronze oder Edelstahl bestehen. Auch das Verschlußstück (9) besteht vorzugsweise ebenfalls aus diamagnetischem Werkstoff, um die Magnetfeldlinien des Permanentmagneten (7) nicht störend zu beeinflussen. Anstelle eines Permanentmagneten (7) könnte im Aufnahmeraum (14) auch ein ferromagnetischer Anker eingebaut sein, oder das Verschlußstück (9) selbst könnte aus ferromagnetischem Material bestehen.

Wie insbesondere aus Figur 2 hervorgeht, ist das Verschlußstück (9) vorteilhaft mit einem gegen den Ventilsitz (6) vorstehenden Schließdorn (16) ausgebildet. Dieser weist als Dichtungselement einen in einer umlaufenden Nut (18) eingelegten Dichtring (17) auf. Weil es sich bei der Druckfeder (8) vorzugsweise um eine Standard-Schraubendruckfeder nach DIN-Norm handelt, kann diese hinsichtlich ihrer Federcharakteristik bzw. Progression problemlos und exakt justiert werden. Eine Korrektur kann beispielsweise dadurch erfolgen, daß zwischen Druckfeder (8) und Schulter des Verschlußstücks (9) ringförmige Unterlegscheiben eingelegt werden.

Aus Gründen äußerster Sicherheit gegen Unfälle ist vorgesehen, daß die Verschlußkappe (12) an ihrer Außenfläche (24) (vgl. Fig. 3 und 4) zylinderförmig und insbesondere ohne Angriffsflächen für ein Werkzeug wie Schlüssel etc. ausgebildet ist. Damit soll verhindert werden, daß eine mit dem Absperrorgan (25) hantierende Person aus Unkenntnis, Unachtsamkeit oder Leichtsinn bei im Druckbehälter (30) vorhandenem hohem Innendruck die Verschlußkappe (12) löst oder abschraubt und sich dabei eine Verletzung oder Gasvergiftung zuzieht. Hier sind allerdings auch noch andere Sicherheitsmaßnahmen, wie beispielsweise Kontern, Kleben etc. möglich.

Für den Füll- oder vollständigen Entleerungsvorgang unterhalb des Restdrucks ist gemäß Figur 2 dem Absperrorgan (25) zum Entsperren des innenliegenden Restdruckventils (20) ein Magnetschlüssel in Form einer an die Verschlußkappe (12) von außen anlegbaren und mit einem Magnetkörper (26) ausgestatteten Kappe (27) zugeordnet. Dabei ist die Anordnung so getroffen, daß der Permanentmagnet (7) und der an der Kappe (27) angeordnete Magnetkörper (26) gegengleich gepolte Pole Nord/Süd bzw. Süd/Nord aufweisen. Hierbei entsteht zwischen den ungleichnamigen Polen des Permanentmagneten (7) und des Magnetkörpers (26) ein sehr starkes Magnetfeld mit entsprechend hoher Suszeptibilität, welches das Verschlußstück (9) gemäß Darstellung in der Figur 2 vom Ventilsitz (6) abhebt. Damit ist dann das Restdruckventil (20) in Entsperrungsposition und der Druckbehälter (vgl. Fig. 1, Ziffer 30) kann gefüllt bzw. vollständig entleert werden, wobei das Verschlußelement (21) des Absperrorgans (25) vom Hauptventilsitz (2) abgehoben ist und Versorgungsgas vom Anschluß (23) über die Bohrungen (22, 5, 4, 1) in den Druckbehälter (30) gelangt bzw. das Restgas in Gegenrichtung entweicht.

Nach Füllung bzw. vollständiger Entleerung wird das Handrad (vgl. Fig. 1, Ziffer 29) zum Absperren bzw. in diesem Falle Absenken des Verschlußelements (21) betätigt und der Ver- oder Entsorgungsanschluß kann vom Anschluß-Gewindestutzen (23) entfernt werden; ebenso wird die mit dem Magnetkörper (26) ausgestattete Kappe (27) entfernt, wodurch das Restdruckventil (20) schließt, wobei die Druckfeder (8) das Verschlußstück (9) mit dem Schließdorn (16) bzw. O-Ring (17) gegen den Ventilsitz (6) drückt.

Sobald nach erfolgter Füllung ein Verbraucher an den Anschluß-Gewindestutzen (23) angeschlossen wird und das Verschlußelement (21) bei Betätigung des Handrads (vgl. Fig. 1, Ziffer 29) nach oben bewegt wird, gelangt gemäß Figur 3 Gas in Ausströmrichtung (15) durch das sich gegen die Kraft der Druckfeder (8) öffnende Restdruckventil (20) zum Anschluß-Gewindestutzen (23). Sofern der Druck im Druckbehälter (vgl. Fig. 1, Ziffer 30) von beispielsweise 200 bar wiederum unter den eingestellten Restdruck von 2 bar absinkt, ist die Kraft der Druckfeder (8) größer als der vom Entnahmegas aufgebrachte Gegendruck und das Restdruckventil (20) schließt, wie dies in Figur 4 dargestellt ist. Dabei kommt in dem konischen Ventilsitz (6) der in die Nut (18) eingelegte Dichtungsring (17) zur sicheren Anlage und dichtet das Restdruckventil (20) hermetisch ab. Die Kraft der Druckfeder (8) ist im Verhältnis zur Fläche des Ventilsitzes (6) so ausgelegt, daß das Restdruckventil (20) beispielsweise bei einem vorgegebenen Druck-Schwellwert des Innendrucks von 2 bar die Schließbewegung exakt durchführt. Zur Entsperrung des Restdruckventils (20) muß dann, wie vorstehend beschrieben, zwischen dem Permanentmagneten (7) und dem von außen angelegten Magnetkörper (vgl. Fig. 2, Ziffer 26) infolge einer Anordnung mit ungleichnamiger Polung Süd/Nord/Süd/Nord ein vergleichsweise intensives Magnetfeld aufgebaut werden, welches in der Lage ist, mit einer entsprechend hohen Suszeptilitätswirkung das Verschlußstück (9) gegen die Kraft der Druckfeder (8) anzuziehen.

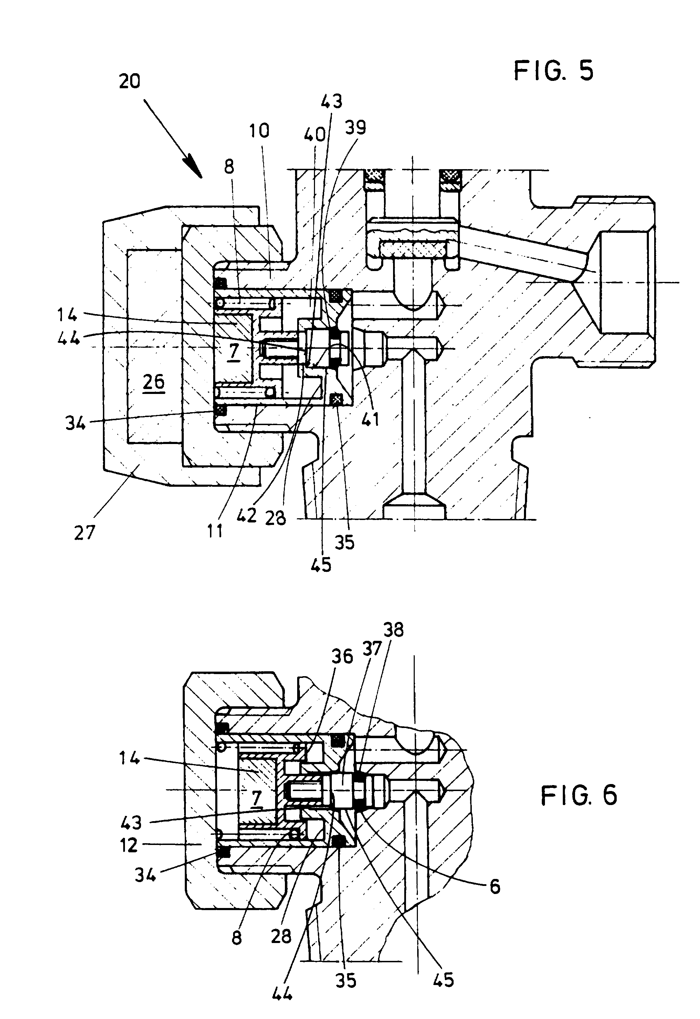

In den Figuren 5 und 6 ist eine gegenüber den vorbeschriebenen Ausführungen weiter verbesserte Ausgestaltung des Restdruckventils (20) einmal im geöffneten Zustand (Fig. 5) und einmal im geschlossenen Zustand (Fig. 6) gezeigt. Die Verbesserung betrifft lediglich Ausführungsdetails, wobei selbstverständlich das Grundprinzip der Erfindung unverändert ist.

Gemäß Figur 5 wird eine besondere Funktionssicherheit des Restdruckventils (20) dadurch erreicht, daß in der Bohrung (11) des Gewindestutzens (10) ein mit der Verschlußkappe (12) abgestütztes und an beiden Enden mit Dichtungsmitteln (34, 35) gegenüber der Bohrung (11) abgedichtetes Einsatzstück (28) eingespannt ist. Dieses nimmt in einer sich nach hinten öffnenden Bohrung (40) ein axial bewegliches Verschlußstück (36) mit einem Schließdorn (37) gleitbar auf. Dieser Schließdorn (37) ist durch eine gegen den Ventilsitz (6) des Restdruckventils (20) gerichtete zentrale Bohrung (41) des Einsatzstücks (28) hindurchtretend von der Druckfeder (8) mit vorgegebener Kraft gegen den Ventilsitz (6) andrückbar und dabei das Restdruckventil (20) verschließbar ausgebildet. Zur Entsperrung des Restdruckventils (20) weist das Verschlußstück (36) in einem gegen die Verschlußkappe (12) gerichteten Aufnahmeraum (14) einen Permanentmagneten (7) auf, der mit einem von außen anlegbaren Magnetschlüssel (26, Fig. 5) gegen die Kraft der Druckfeder (8) anziehbar und der Schließdorn (37) vom Ventilsitz (6) abhebbar angeordnet und ausgebildet ist.

Durch die abgestufte Führung des Verschlußstücks (36) im Einsatzstück (28), und zwar im hinteren Bereich in der Bohrung (40) mit vergleichsweise größerem Durchmesser, und durch den in der vergleichsweise kleineren Bohrung (41) gleitbar geführten Schließdorn (37) wird ein besonders hohes Maß an Führungsqualität dieser Teile erreicht, die auch bei Druckschwankungen eine Vereckung oder Verklemmung der gleitenden Teile sicher verhindert, wodurch die Funktionssicherheit in überraschend einfacher und sicherer Weise optimiert wird.

Wie in Figur 5 weiter dargestellt, besteht der Magnetschlüssel im wesentlichen aus einer mit einem Magnetkörper (26) ausgestatteten Kappe (27). Dieser Magnetkörper (26) ist jedoch durch Erhöhung der Suszeptibilität und damit der funktionellen Sicherheit gegenüber dem Permanentmagneten (7) des Restdruckventils (20) mit einer erheblich größeren Masse an magnetisch aktivem Material ausgestattet. Dadurch wird die Anziehungskraft so weit erhöht, daß einerseits die Kraft der Druckfeder (8) und andererseits eine mögliche innere Reibung der beweglichen Ventilteile mit hoher Leistungsreserve überwunden wird.

Eine weitere vorteilhafte Ausgestaltung ergibt sich dadurch, daß die zentrale Bohrung (41) an ihrer Mündung mit einem Ventilsitz (39) ausgebildet ist und der Schließdorn (37) einen Dichtring (38) aufweist, der bei Sperrstellung des Restdruckventils (20) gegen dessen Ventilsitz (6) und bei Entsperrung desselben gegen den Ventilsitz (39) des Einsatzstücks (28) anliegt. Mit Vorteil sind bei dieser Ausgestaltung in der beispielhaft in Fig. 5 gezeigten Entsperrungsstellung die inneren Räume des Einsatzstücks (28), in welchen das Verschlußstück (36) gleitet, gegenüber Zutritt von Gasinhalt des Druckbehälters (30) hermetisch abgedichtet. Es kann sich kein Schmutz, Staub oder Kondensat darin absetzen oder sammeln, wodurch die Langzeit-Verfügbarkeit ohne Wartungsbedarf gesichert ist. Dadurch, daß die beiden Ventilsitze (6 bzw. 39) in Durchmesser und Konizität einander gleich sind, genügt die einzige Dichtung (38) in Form eines Dichtrings nach DIN zur beiderseitigen sicheren Abdichtung. Weiter trägt die Gleichheit der Ventilsitze (6, 39) und die Verwendung von nur einem Dichtring (38) zur Vereinfachung und zur sicheren Funktion des Restdruckventils (20) bei.

Dabei ist mit einer weiteren vorteilhaften Ausgestaltung vorgesehen, daß die zentrale Bohrung (41) nach rückwärts unter Bildung einer inneren Schulter (43) einen Bereich (42) verkleinerten Durchmessers und der in das Verschlußstück (36) eingeschraubte Schließdorn (37) unter Bildung einer äußeren Schulter (44) einen Bereich vergrößerten Durchmessers (45) aufweist, durch deren Zusammenwirken bei der Entsperrungsstellung der Weg des Schließdorns (37) beim gegenseitigen Anschlag der Schultern (43, 44) begrenzt und der Dichtring (38) bei seiner Auflage am Ventilsitz (39) entlastet wird. Hierdurch wird eine Überlastung und damit Ermüdung der O-Ringdichtung (38) mit einfachen Mitteln wirksam verhindert.

Wie weiterhin aus Fig. 5 erkennbar ist, kann infolge der großen Masse des von außen angelegten Magnetschlüssels (27) das Restdruckventil (20) während der Betriebszustände "Füllung" und "Entnahme" sicher geöffnet gehalten werden. Durch die Abdichtung mit Hilfe des Dichtrings (38) sind sämtliche Funktionselemente des Restdruckventils (20) von der Berührung mit dem Gasinhalt des Druckbehälters (30) abgeschottet.

Zur Aktivierung des Restdruckventils (20) zur automatischen Absperrung gegenüber dem zu haltenden Restdruck im Innenraum des Druckbehälters (30) wird der Magnetschlüssel (27) abgenommen (Fig. 6) und dadurch mit Hilfe der Rückstellkraft der Druckfeder (8) das Restdruckventil (20) mit dem Ventilsitz (6) und dem Dichtring (38) geschlossen. Dabei ist die Druckfeder (8) so justiert bzw. eingerichtet, daß ein Restdruck von etwa 2 +- 0,3 bar resultiert.

Insgesamt ist das magnetisch betätigbare Restdruckventil (20) sowie dessen Anordnung im Körper (19) des Absperrorgans (25) unkompliziert und infolgedessen in der Funktion von höchster Zuverlässigkeit.

Die erfindungsgemäßen Maßnahmen sind nicht auf die in den Zeichnungsfiguren dargestellten Ausführungsbeispiele beschränkt. So kann beispielsweise, ohne den Rahmen der Erfindung zu verlassen, die magnetische Betätigung des Restdruckventils (20) auf beliebige andere Art und in anderer Anordnung der Einzelelemente erfolgen. Die jeweilige konstruktive Ausgestaltung ist in Anpassung an eine spezielle Verwendung der Vorrichtung dem Fachmann anheimgestellt.

## Patentansprüche

1. Absperrorgan (25) für einen unter Innendruck eines Mediums stehenden Druckbehälter (30),
- dessen Körper (19) mit einem mittels eines auf einen Hauptventilsitz (2) preßbaren Verschlußelements (21) verschließbaren Kanal (1) versehen ist,
- wobei der den Hauptventilsitz (2) und das Verschlußelement (21) aufnehmende Gehäuseraum über eine Bohrung (22) mit einem Anschluß-Gewindestutzen (23) in Verbindung steht,
- und im Körper (19) ein Restdruckventil (20) vorgesehen und so ausgebildet ist,
- daß es einen Austritt des Mediums bei vom Hauptventilsitz (2) abgehobenem Verschlußelement (21) verhindert, sobald der Druck des Mediums im Druckbehälter (30) einen vorgegebenen Wert unterschreitet und dann federbelastet schließt,
- wobei das Restdruckventil (20) quer zur Achse des Körpers (19) angeordnet ist,
- und ein durch eine Druckfeder (8) in Richtung auf einen Ventilsitz (6) belastetes Verschlußstück (9, 36) aus einem zumindest teilweise magnetischen Material aufweist,
- das durch einen Magneten (26) vom Ventilsitz (6) abhebbar ist,
**dadurch gekennzeichnet**,
- daß der Kanal (1) unterhalb des Hauptventilsitzes (2) eine Unterbrechung (3) aufweist,
- welche durch in Ausströmrichtung (15) des Mediums gesehen, vor und hinter der Unterbrechung (3) an den Kanal (1) anschließende, in eine mit einer Verschlußkappe (12) verschließbare Bohrung (11) eines das Restdruckventil (20) aufnehmenden Gewindestutzens (10) mündende Umleitungsbohrungen (4, 5) überbrückt ist,
- wobei die in Ausströmrichtung (15) vordere Umleitungsbohrung (4) mit dem Ventilsitz (6) versehen ist,
- an den unter dem Einfluß der sich an der Verschlußkappe (12) abstützenden Druckfeder (8) das in der Bohrung (11) axial geführte Verschlußstück (9, 36) mit einem einen umfangsseitigen Dichtring (17, 38) aufweisenden Schließdorn (16, 37) gegen den Druck des Mediums andrückbar ist,
- und der Schließdorn (16, 37) durch einen mit dem Magneten (26) ausgestatteten sowie von außen an die Verschlußkappe (12) anlegbaren kappenartigen Magnetschlüssel (27) gegen die Rückstellkraft der Druckfeder (8) vom Ventilsitz (6) abhebbar ist.

2. Absperrorgan nach Anspruch 1, **dadurch gekennzeichnet**, daß das Verschlußstück (9, 36) am freien Ende einen Aufnahmeraum (14) aufweist, in dem ein Permanentmagnet (7) angeordnet ist.

3. Absperrorgan nach Anspruch 1, **dadurch gekennzeichnet**, daß das Verschlußstück (9, 36) selbst aus ferromagnetischem Material besteht.

4. Absperrorgan nach einem oder mehreren der Ansprüche 1 bis 3, **dadurch gekennzeichnet**, daß in der Bohrung (11) des Gewindestutzens (10) ein an der Verschlußkappe (12) abgestütztes und an beiden Enden mit Dichtungsmitteln (34, 35) gegenüber der Bohrung (11) abgedichtetes Einsatzstück (28) eingespannt ist, das in einer sich nach hinten öffnenden Bohrung (40) ein axial bewegliches Verschlußstück (36) mit dem Schließdorn (37) gleitbar aufnimmt, wobei dieser durch eine zentrale Bohrung (41) des Einsatzstücks (28) hindurchtretend von der Druckfeder (8) gegen den Ventilsitz (6) andrückbar ist.

5. Absperrorgan nach Anspruch 4, **dadurch gekennzeichnet**, daß die zentrale Bohrung (41) des Einsatzstücks (28) an der Mündung mit einem Ventilsitz (39) ausgebildet ist und der Schließdorn (37) einen Dichtring (38) aufweist, der bei Sperrstellung des Restdruckventils (20) gegen dessen Ventilsitz (6) und bei Entsperrung desselben gegen den Ventilsitz (39) des Einsatzstücks (28) anliegt.

6. Absperrorgan nach Anspruch 4 oder 5, **dadurch gekennzeichnet**, daß die zentrale Bohrung (41) nach rückwärts unter Bildung einer inneren Schulter (43) einen Bereich (42) verkleinerten Durchmessers und der in das Verschlußstück (36) eingeschraubte Schließdorn (37) unter Bildung einer äußeren Schulter (44) einen Bereich vergrößerten Durchmessers (45) aufweist, durch deren Zusammenwirken bei der Entsperrungsstellung der Weg des Schließdorns (37) beim gegenseitigen Anschlag der Schultern (43, 44) begrenzt und der Dichtring (38) bei seiner Auflage am Ventilsitz (39) entlastet wird.

7. Absperrorgan nach einem oder mehreren der Ansprüche 1 bis 6, **dadurch gekennzeichnet**, daß der Körper (19) mit dem Gewindestutzen (10) sowie die Verschlußkappe (12) aus diamagnetischem Werkstoff, beispielsweise aus Messing, Bronze oder Edelstahl bestehen.

8. Absperrorgan nach einem oder mehreren der Ansprüche 1 bis 7, **dadurch gekennzeichnet**, daß das Verschlußstück (9, 36) aus diamagnetischem Werkstoff besteht.

9. Absperrorgan nach einem oder mehreren der Ansprüche 1 bis 8, **dadurch gekennzeichnet**, daß die Verschlußkappe (12) an ihrer Außenfläche (24) zylinderförmig und insbesondere ohne Angriffsflächen für ein Werkzeug wie Schlüssel etc. ausgebildet ist.

## Claims

1. Shut-off device (25) for a pressure vessel (30) under the internal pressure of a medium,
- the body (19) of which device is provided with a channel (1) which can be closed by means of a closing element (21) which can be pressed onto a main valve seat (2),
- wherein the housing space which holds the main valve seat (2) and the closing element (21) is connected via a bore (22) to a threaded connection piece (23),
- and a residual pressure valve (20) is provided in the body (19) and formed such
- that it prevents the medium flowing out when the closing element (21) is raised from the main valve seat (2) as soon as the pressure of the medium in the pressure vessel (30) falls below a predetermined value and then closes under a spring load,
- wherein the residual pressure valve (20) is arranged transversely to the axis of the body (19),
- and a closing piece (9, 36), which is loaded by a compression spring (8) in the direction of a valve seat (6), consists of a material which is at least partly magnetic,
- which piece can be raised from the valve seat (6) by a magnet (26),
characterised in
- that the channel (1) has a gap (3) below the main valve seat (2)
- which is bridged by diversion bores (4, 5) which, viewed in the outflow direction (15) of the medium, adjoin the channel (1) before and after the gap (3) and lead into a bore (11), which can be closed by a closing cap (12), in a threaded connection piece (10) holding the residual pressure valve (20),
- wherein the diversion bore (4) which leads in the outflow direction (15) is provided with the valve seat (6)
- against which the closing piece (9, 36), which is axially guided in the bore (11), can be pressed with a closing spindle (16, 37), which comprises a circumferential sealing ring (17, 38), under the influence of the compression spring (8), which is supported at the closing cap (12), against the pressure of the medium,
- and the closing spindle (16, 37) can be raised from the valve seat (6) against the restoring force of the compression spring (8) by a cap-like magnetic key (27) which is provided with the magnet (26) and can be applied to the closing cap (12) from outside.

2. Shut-off device according to claim 1, characterised in that the closing piece (9, 36) comprises at the free end a holding space (14), in which a permanent magnet (7) is arranged.

3. Shut-off device according to claim 1, characterised in that the closing piece (9, 36) itself consists of a ferromagnetic material.

4. Shut-off device according to one or more of claims 1 to 3, characterised in that an insert (28), which is supported at the closing cap (12) and sealed off from the bore (11) at both ends by sealing means (34, 35), is fixed in the bore (11) in the threaded connection piece (10) and holds an axially mobile closing piece (36) with the closing spindle (37) such that it can slide in a bore (40) which opens to the rear, which spindle can be pressed by the compression spring (8) through a central bore (41) in the insert (28) against the valve seat (6).

5. Shut-off device according to claim 4, characterised in that the central bore (41) in the insert (28) is formed with a valve seat (39) at the mouth, and the closing spindle (37) comprises a sealing ring (38) which bears against the valve seat (6) of the residual pressure valve (20) when the latter is in the blocking position and against the valve seat (39) of the insert (28) when it is opened.

6. Shut-off device according to claim 4 or 5, characterised in that the central bore (41) comprises towards the rear an area (42) of a reduced diameter, thus forming an inner shoulder (43), and the closing spindle (37), which is screwed into the closing piece (36), comprises an area of an enlarged diameter (45), thus forming an outer shoulder (44), the co-operation of which areas in the open position limits the travel of the closing spindle (37) when the shoulders (43, 44) contact one another and reduces the load on the sealing ring (38) as it bears against the valve seat (39).

7. Shut-off device according to one or more of claims 1 to 6, characterised in that the body (19) with the threaded connection piece (10) as well as the closing cap (12) consist of a diamagnetic material, for example of brass, bronze or special steel.

8. Shut-off device according to one or more of claims 1 to 7, characterised in that the closing piece (9, 36) consists of a diamagnetic material.

9. Shut-off device according to one or more of claims 1 to 8, characterised in that the outer surface (24) of the closing cap (12) is cylindrical and the latter is formed in particular without surfaces for applying a tool such as a key, etc.

## Revendications

1. Organe d'arrêt (25) pour un réservoir (30) contenant un fluide sous pression,
• dont le corps (19) est pourvu d'un canal (1) présentant un siège principal de soupape (2) pouvant être fermé au moyen d'un élément de fermeture (21),
• la chambre recevant le siège principal de soupape (2) et l'élément de fermeture (21) est reliée par un perçage (22) à un ajutage fileté de raccordement (23),
• et une soupape de pression résiduelle (20) est réalisée dans le corps (19) de façon que
• elle évite la sortie du fluide lorsque l'élément de fermeture (21) est soulevé par rapport au siège principal de soupape (2), dès que la pression du fluide dans le réservoir (30) passe en dessous d'une valeur prédéterminée, et se ferme alors sous l'effet d'un ressort,
• la soupape de pression résiduelle (20) est transversale à l'axe du corps (19), et comporte
• une pièce de fermeture (9, 36) chargée par un ressort de compression (8) dans le sens d'un siège de soupape (6), au moins partiellement en matière magnétique
• et celle-ci peut être soulevée du siège (6) par un aimant (26),
caractérisé en ce que
• le canal (1) comporte une interruption (3) en dessous du siège principal de soupape (2),
• celle-ci, vue dans le sens de circulation (15) du fluide est court-circuitée en amont et en aval de l'interruption (3), par un perçage (11) relié au canal (1), et qui se ferme avec un chapeau de fermeture (12) d'un perçage d'un ajutage fileté (10) recevant la soupape de pression résiduelle (20), débouchant dans les perçages de contournement (4, 5),
• le perçage de contournement (4), amont dans le sens de l'écoulement (15) est muni du siège de soupape (6),
• la pièce de fermeture (9, 36) est guidée axialement dans le perçage (11) en étant appuyé par un ressort de compression (8) prenant sous l'influence du chapeau de fermeture (12), est pressée avec une broche de fermeture (16, 37) comportant un joint d'étanchéité (17, 38) périphérique, contre la pression du fluide,
• et la broche de fermeture (16, 37) peut être soulevée contre la force de rappel du ressort de compression (8) par rapport au siège de soupape (6), par une clé magnétique (27) en forme de chapeau, appliquée extérieurement contre le chapeau de fermeture (27) et ayant un aimant (26).

2. Organe d'arrêt selon la revendication 1,
caractérisé en ce que
la pièce de fermeture (9, 36) est prévue à l'extrémité d'un chambre (14) logeant un aimant permanent (7).

3. Organe d'arrêt selon la revendication 1,
caractérisé en ce que
la pièce de fermeture (9, 36) est elle-même en matière ferromagnétique.

4. Organe d'arrêt selon l'une ou plusieurs des revendications 1 à 3,
caractérisé en ce que
le perçage (11) de l'ajutage fileté (10) reçoit un insert (28), s'appuyant contre le chapeau de fermeture (12) et rendu étanche aux deux extrémités avec des moyens d'étanchéité (34, 35) par rapport au perçage (11), et qui reçoit de manière coulissante dans son perçage (40) ouvert vers l'arrière, une pièce de fermeture (36) mobile axialement avec la broche de fermeture (37), celle-ci passant par un perçage central (41) de l'insert (28) en étant pressée par le ressort de compression (8) contre le siège de soupape (6).

5. Organe d'arrêt selon la revendication 4,
caractérisé en ce que
le perçage central (41) de l'insert (28) est muni, à son orifice, d'un siège soupape (39) et la broche de fermeture (37) comporte un joint d'étanchéité (38) lorsque la soupape de pression résiduelle (20) est en position de fermeture et qui, lors du desserrage de cette soupape, s'appuie contre le siège de soupape (39) de l'insert (28).

6. Organe d'arrêt selon les revendications 4 ou 5,
caractérisé en ce que
le perçage central (41) présente un diamètre diminué vers l'arrière avec une zone (42) formant un épaulement intérieur (43) et la broche de fermeture (37) vissée dans la pièce de fermeture (36) présente un diamètre (45) augmenté dans une zone en formant un épaulement extérieur (44), et dont la coopération, en position de déverrouillage, libère le chemin de la broche de fermeture (37) avec appui réciproque des épaulements (43, 44) et décharge le joint d'étanchéité (38) lorsque celui-ci s'appuie contre le siège de soupape (39).

7. Organe d'arrêt selon une ou plusieurs des revendications 1 à 6,
caractérisé en ce que
le corps (19) avec l'ajutage fileté (10) ainsi que le capuchon de fermeture (12) sont en une matière diamagnétique par exemple en laiton, en bronze ou en acier spécial.

8. Organe d'arrêt selon une ou plusieurs des revendications 1 à 7,
caractérisé en ce que
la pièce de fermeture (9, 36) est en matière diamagnétique.

9. Organe d'arrêt selon une ou plusieurs des revendications 1 à 8,
caractérisé en ce que
le capuchon de fermeture (12) a une surface extérieure (24) de forme cylindrique et notamment sans surface de préhension pour un outil tel qu'une clé, ou autres.
